# EUROPEAN PATENT APPLICATION

(11) **EP 3 014 983 A1**
(43) Date of publication of application: **04.05.2016**
(21) Application number: 15188506.8
(22) Date of filing: 06.10.2015
(51) Int. Cl.: A01G 25/09

(54) **FLUID DISPENSER DEVICE**

(30) Priority: 29.10.2014 IT RE20140087
(71) Applicant: Olivetti, Giorgio, 42021 Bibbiano (RE) (IT)
(72) Inventor: Olivetti, Giorgio, 42021 Bibbiano (RE) (IT)
(74) Representative: Corradini, Corrado

(57) **Abstract**

A fluid dispenser device (10) which comprises a bearing frame (20) provided with a plurality of ground-resting wheels (23, 24, 25) of which at least a drive wheel (24) activated in rotation by at least a motor (30) located on-board the bearing frame (20), a tank (40) of at least a fluid to be dispensed supported by the bearing frame (20) and a pump (50), located on-board the bearing frame (20), able to collect the fluid contained in the tank (40) so as to send the fluid under pressure to at least a dispenser nozzle (73) via a hose (70) interposed between the dispenser nozzle (73) and the tank (40), wherein the hose (70) is wound about at least a hose reel (80) fixed to the bearing frame (20), so as to be able to activate the dispenser nozzle (73) between at least a retracted position, in which the dispenser nozzle (73) is arranged in proximity of the bearing frame (20), and an extracted position, in which the dispenser nozzle (73) is arranged in a distal position from the bearing frame (20).

## Description

### TECHNICAL FIELD

The present invention relates to a fluid dispenser device, such as for example liquids for irrigation use, such as water, fertilisers, insecticides or the like.

In greater detail, the invention relates to a dispenser device of fluids for irrigation of vegetation located in places where there is limited access to resources for supply of water and/or electricity, such as for example cemeteries.

### PRIOR ART

As is known, fluid dispenser devices exist for irrigation purposes which comprise a liquid tank, a pump for collecting the liquid from the tank and sending the liquid towards one or more dispenser nozzles, for example located in a fixed position and distributed in the area to be irrigated.

Further, there exists the possibility of loading a liquid tank on a mobile carriage, for example a tractor or the like, so as to be able to transport the irrigating device towards the vegetation planted in remote positions with respect to the point of attachment to the municipal supply.

These irrigating devices, however, are not always usable in awkward-to-access places, in which the manoeuvring spaces are small and where access to the water supply sources is not particularly easy. Further, these irrigating devices require a certain degree of experience or ability for the personnel that has to activate them, and for this reason are not always easy to access or use.

An aim of the present invention is to obviate the above-mentioned drawbacks in the prior art, with a solution that is simple, rational and relatively inexpensive.

The aims are attained by the characteristics of the invention reported in the independent claim. The dependent claims delineate preferred and/or particularly advantageous aspects of the invention.

### DESCRIPTION OF THE DEVICE

The invention in particular concerns a fluid dispenser device which comprises a bearing frame provided with a plurality of ground-resting wheels of which at least a drive wheel activated in rotation by at least a motor located on-board the bearing frame, a tank of at least a fluid to be dispensed supported by the bearing frame and a pump, located on-board the bearing frame, able to collect the fluid contained in the tank so as to send the fluid under pressure to at least a dispenser nozzle via a hose interposed between the dispenser nozzle and the tank, wherein the hose is wound about at least a hose reel fixed to the bearing frame, so as to be able to activate the dispenser nozzle between at least a retracted position, in which the dispenser nozzle is arranged in proximity of the bearing frame, and an extracted position, in which the dispenser nozzle is arranged in a distal position from the bearing frame.

With this solution, vegetation that is difficult to reach can be irrigated using the municipal supply without any need for work to predispose fixed plants, and in any case, the operation is simple, intuitive and free of strain for the user.

In a further aspect of the invention, the hose reel comprises a support body fixed to the bearing frame, a winding drum of the hose rotatably associated to the support body and at least a recall spring interposed between the support body and the winding drum configured such as to re-wind the hose from the extracted position to the retracted position.

In this way the re-winding of the hose is possible simply and intuitively, without any strain on the user.

In a further aspect of the invention, the device can comprise a battery located on-board the bearing frame and configured such as to electrically power the motor and the pump.

The battery can advantageously be fixed extractably from the bearing frame by means of at least a releasable hooking element.

With this solution the device can be left in the location to be watered (for example the cemetery or another place distant from the user's house) and the battery can be recharged in a remote position (for example at the user's home).

In a further aspect of the invention, the device can comprise a box casing fixed to the bearing frame and configured so as to enclose internally thereof the tank, the motor, the pump, the hose reel and at least a portion of the battery.

In this way, the device is safe and any mishandling thereof from the outside is prevented or at least limited.

The battery can advantageously comprise at least a grippable portion arranged externally of the box casing.

Further, the grippable portion of the battery can comprise release means able to command the release of the hooking element of the battery located internally of the box body.

In a further aspect of the invention, the drive wheel is located on an axle provided with at least a differential.

With this solution the device can be easily activated on any type of terrain, including bumpy ground.

Further, the device can comprise at least an activating handlebar associated to the bearing frame and provided with command means of the motor for activating the at least a drive wheel in movement.

The device can advantageously comprise a control and command unit of the motor, configured so as to selectively activate the motor at least at a first slow velocity and a second fast velocity.

With this solution, the device can be manoeuvred easily and safely by any person, even a person having little experience.

In a further aspect of the invention, the pump is self-priming in response to the opening of a tap located at the dispenser nozzle.

In this way the dispensing of the liquid is particularly efficient, intuitive and easy for the user.

### BRIEF DESCRIPTION OF THE DRAWINGS

Further characteristics and advantages of the invention will emerge from a reading of the description that follows, provided by way of non-limiting example, with the aid of the figures of the accompanying tables.

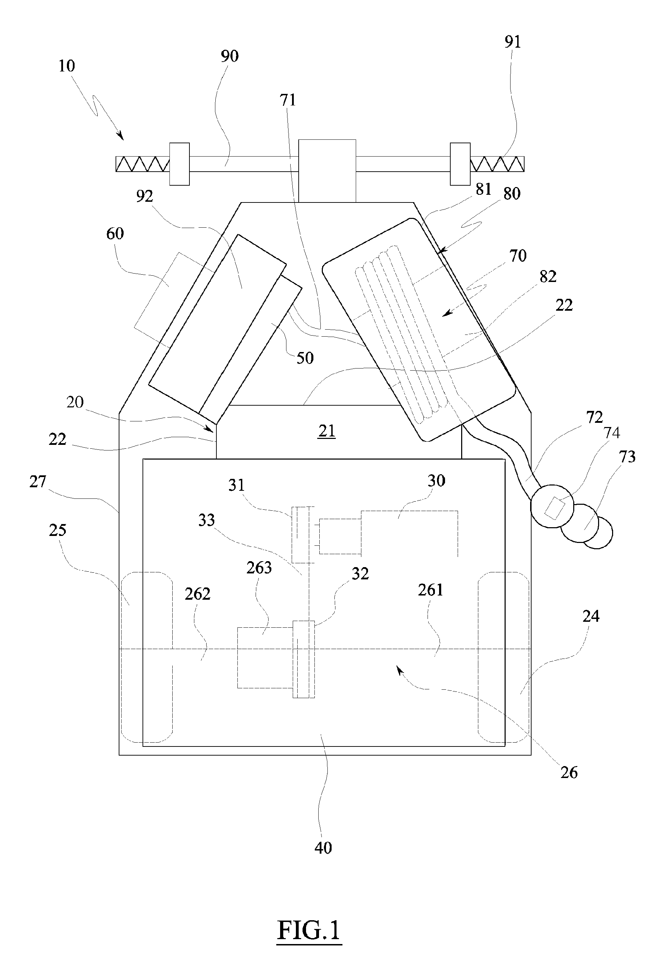

Figure 1 is a view from above (with the box casing open) of a dispenser device according to the invention.

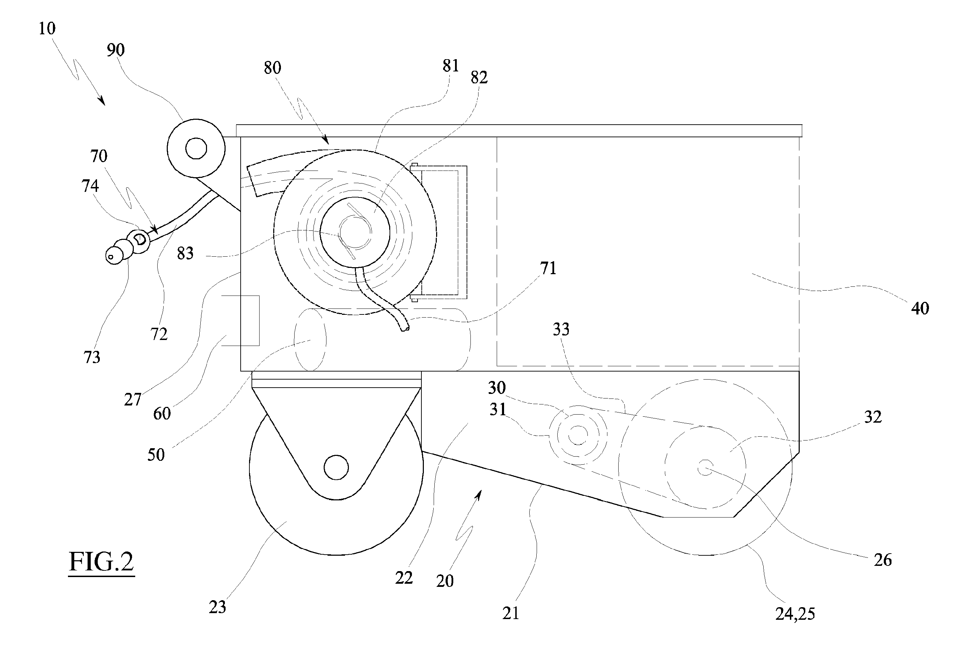

Figure 2 is a lateral view of figure 1.

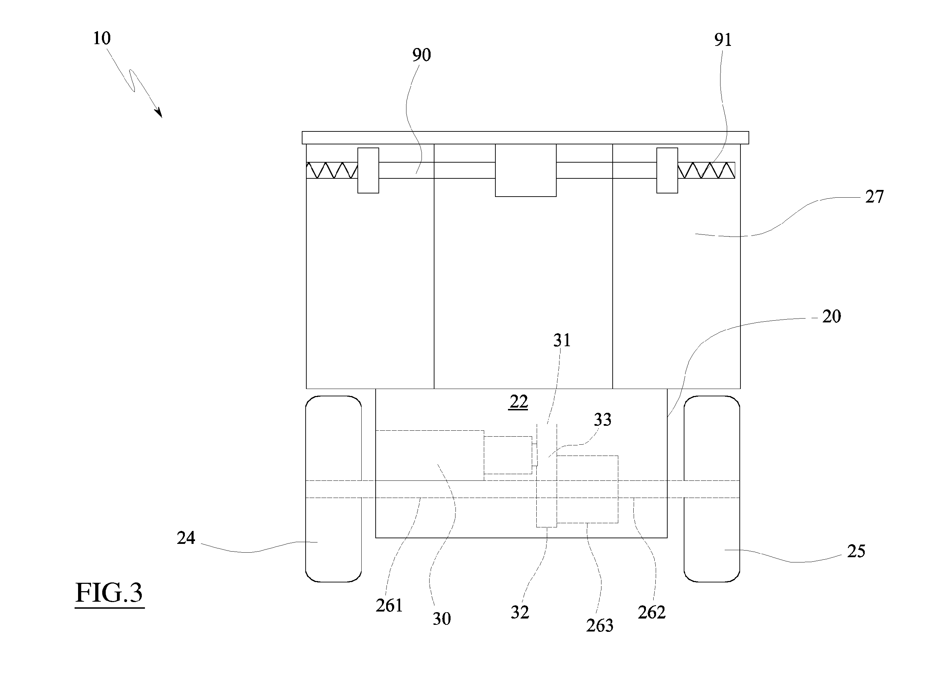

Figure 3 is a front view of figure 1.

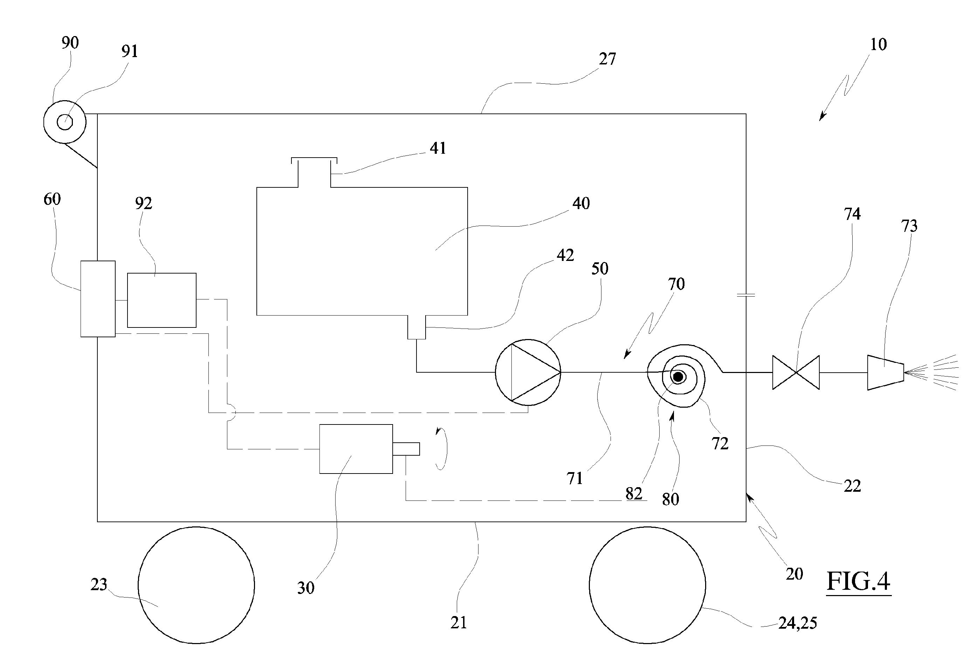

Figure 4 is a schematic view of the device of figure 1.

### BEST WAY OF CARRYING OUT THE INVENTION

With particular reference to the figures of the drawings, 10 denotes in its entirety a fluid dispenser device, for example liquids or the like for irrigation use.

The device 10 is in particular a device for irrigation of vegetation planted in cemeteries or like funerary environments, but could also be used in other places or for other uses.

The device 10 comprises a bearing frame 20, for example substantially rigid. The bearing frame 20 is for example conformed as a basket, in practice it comprises, for example, a bottom platform 21 and perimeter walls 22 rising from the bottom platform 21.

The bearing platform 20 is supported by a plurality of ground rests, for example wheels 23, 24, 25 (in the example three in number, though they might be a different number, for example four), of which for example a rear wheel 23, for example of a pivoting type, and two front wheels 24 and 25.

In the example, two opposite lateral perimeter walls 22 each comprise a through-hole 220, such that the through-hole 220 of a perimeter wall 22 is aligned to the through-hole 220 of the opposite perimeter wall 22.

An axle 26 is rotatably accommodated in the through-holes 220 (or at least is rotatably supported by the bearing frame 20 in an equivalent way), for example by means of interposing of suitable bearings (not shown), which axle 26 exhibits opposite ends thereof located externally of the bearing frame 20 and able to support the rear wheels 24 and 25.

The axle 26 comprises a first shaft 261 able to support one of the front wheels 24 and 25, in the example the front wheel 24, and a second shaft 262, coaxial to the first shaft 261, constrained in translation thereto, but deconstrained therefrom in rotation, which can support the other of the front wheels 24 and 25, for example the front wheel 25.

The first shaft 261 and the second shaft 262 are associated to one another by a differential 263, for example with a 1:1 transmission ratio, which is located internally of the bearing frame 20.

Alternatively, the first shaft 261 and the second shaft 262 might be reciprocally associated by means of a rotational joint which enables reciprocal rotation between the first shaft 261 and the second shaft 262.

In the examples, the front wheels 24 and 25 are associated solidly in rotation (by means of the respective hubs) to the respective free end portions of the axle 26 (i.e. the first shaft 261 and the second shaft 262), though it is however also possible for the axle 26 to be formed by a single shaft and without use of the differential - one of the front wheels 24 and 25 can be associated rotatably (for example by means of a bearing) to the relative free end of the axle 26.

The bearing frame 20 further supports a box casing 27 able to superiorly close (for example) the bearing frame.

In practice the bearing frame 20 and the box casing 27 define and delimit a substantially closed volume (or partially closed).

The box casing 27, for example, can be made of a substantially rigid plastic material and, for example, can be variously configured.

For example the box casing 27, like for example the bearing structure 20, can exhibit a substantially spindle-shaped or tapered shape going from the front end (at the front wheels 24 and 25) to the rear end (at the rear wheel 23).

A motor is also fixed internally of the bearing frame 20 (i.e. the volume enclosed by the bearing frame and the box casing 27), in the example an electric motor 30, which via drive transmission means can actuate at least a wheel 23, 24, 25 in rotation, in particular one of the front wheels 24 and 25. The motor might alternatively be an electrically-powered hydraulic motor or another type of motor.

The drive transmission means comprise a drive pulley 31 splined on the drive shaft of the motor 30, a driven pulley 32 associated solidly to the axle 26, for example to at least one from between the first shaft 261 and the second shaft 262 (in the example the first shaft 261).

The driven pulley 32, for example, can be splined directly on the axle 26 (the first shaft 261) or can be associated thereto by means of the differential 263. The drive transmission means further comprise a flexible organ, such as a belt 33, loop-wound on the drive pulley 31 and the driven pulley 32, such as to transfer the rotary motion from the drive pulley 31 to the driven pulley 32, for example without sliding.

The drive transmission means might alternatively comprise a cogged connection formed for example by gearings which directly enmesh to one another or crown cogwheels connected by a chain.

The device 10 further comprises a tank 40 supported, for example by fixing brackets (not shown) or like devices, internally of the bearing frame 20 (i.e. the volume enclosed by the bearing frame 20 and the box casing 27).

The tank 40 comprises a substantially closed box casing provided with an inlet 41 for topping-up the liquid to be dispensed, for example accessible from externally of the bearing frame 20 and/or the box casing 27, and an outlet 42 of the liquid to be dispensed.

The tank 40, for example, might have a capacity comprised between 10 and 90 litres, preferably between 30 and 70 litres, for example 70 litres.

The device 10 further comprises a pump 50 provided with an aspirating conduit (not illustrated) which can be connected, via appropriate piping, to the outlet 42 of the tank 40 so as to source the liquid contained therein.

The pump 50 is located internally of the bearing frame 20 (i.e. the volume enclosed by the bearing frame 20 and the box casing 27) and fixed thereto. The pump 50 comprises a delivery conduit (not illustrated) through which the liquid sourced from the tank 40 is dispensed.

The pump 50, for example, is a self-priming pump provided with an automatic pressure gauge which starts up the pump following a detected drop in pressure encountered in the delivery conduit, as will be more fully described in the following.

The pump 50 can further comprise a filter able to filter the liquid that crosses the pump between the aspirating pump and the delivery pump.

Further, the pump 50 can comprise an anti-vibration base through which it is associated to the bearing frame 20, so as to damp the vibrations of the pump without the vibrations being transferred to the bearing frame 20.

The device 10 comprises a battery 60, which is located on-board the bearing frame 20 and is able to electrically supply the motor 30 through appropriate cabling.

Further, the battery 60 can electrically power the pump 50 via appropriate cabling.

The battery 60, for example, might be contained internally of the enclosed volume by the bearing frame 20 and by the box casing 27.

In a preferred embodiment the battery 60 is fixed extractably to the bearing frame 20 by means of at least a hooking element, for example a snap-fitting having elastic teeth or a bayonet coupling or the like, but in any case a disengageable hooking element.

In this case the box casing 27 and/or the bearing frame 20 comprises a housing seating (not illustrated) complementarily-profiled to at least a portion of the battery 60, in which the battery 60 (or at least a portion thereof) is substantially snugly insertable.

In this case the battery 60 might comprise at least a grippable portion arranged externally of the box casing 27 (or at least externally of the volume enclosed by the box casing and the bearing frame 20).

In practice, the battery 60 might exhibit an internal portion inserted in the housing seating and arranged internally of the volume enclosed by the box casing 27 and by the bearing frame 20, which is connected by means of appropriate electrical contacts to the electric supply cabling of the motor 30 and the pump 50.

The battery 60 exhibits also an external portion, for example having an ergonomical shape, that can be gripped for extraction from the housing seating and for installation of the battery in the housing seating therefor.

The battery 60, for example the external portion thereof, can comprise release means, such as buttons or the like, able to command the release of the hooking element of the battery 60 located internally of the box casing 27 and/or the bearing structure 20.

For example, the battery 60 might exhibit a very modest volume, for example comprised between 100 cm³ and 2600 cm³, preferably between 150 cm³ and 300 cm³, advantageously substantially 200 cm³.

The battery 60 might exhibit a voltage of 24 V and a capacity of 10Ah.

The device 10 further comprises a hose 70 for dispensing the liquid collected by the pump 50.

In the example, the hose 70 comprises an inlet portion 71 connectable to the delivery conduit of the pump 50 and an outlet portion 72, for example detached from the inlet portion 71 and in any case hydraulically connected thereto.

A dispenser nozzle 73 is for example connected to the outlet portion 72, which dispenser nozzle 73 is for example equipped with a tap 74 configured so as to open, close and/or section the outlet opening of the dispenser nozzle 73.

In practice, on the opening of the tap 74 the pump 50 activates automatically to source liquid from the tank 40 which, through the hose 70, reaches the dispenser nozzle and is thus dispensed to the outside.

The dispenser nozzle 73, like the outlet portion 72 of the hose 70, opens externally of the bearing frame 20 and/or the box casing 27 via an opening, so that the dispenser nozzle 73 can be easily accessible by the operator's hands.

It is possible, for this purpose, for the hose 70 to comprise an abutting element that can keep the dispenser nozzle 73 always external of the bearing frame 20 and/or of the box casing 27 by abutting, from the outside, on the edge of the opening from which the dispenser nozzle exits.

The hose 70 is for example a substantially flexible piping.

The hose 70, in particular the outlet portion 72, for example exhibits an internal diameter of about 8-10 mm and a length, respectively of about 10 - 8 metres.

The hose 70, in particular the outlet portion 72 thereof, is for example wound about a hose reel 80.

The hose reel 80 comprises a support body 81 fixed to the bearing frame 20, for example internally thereof.

The support body 81 comprises a substantially rigid shell internally of which the hose 70 is wound (at least the outlet portion thereof) and, for example, from which exits, from a suitable radial opening, the free end of the hose 70 itself, i.e. the outlet portion 72 thereof provided with the dispenser nozzle 73). A winding drum 82 is rotatably associated to the support body 81 on which the hose 70 is wound.

For example a recall spring 83 can be comprised between the support body 81 and the winding drum 82, which recall spring 83 is able to activate in rotation the winding drum 82 in opposition to the imposed rotation which enables unwinding the hose 70 from the winding drum 82.

The hose reel 80 might further comprise a stop element (not illustrated) able to block, temporarily and releasably, the rotation of winding drum 82 imposed by the recall force exerted by the recall spring 83.

The dispenser nozzle 73 is therefore mobile (for example in opposition to the action of the recall spring) from a retracted position, in which substantially all the hose (the outlet portion 72 thereof) is wound about the winding drum 82 and in practice the dispenser nozzle 73 is in proximity of the opening from which the support body 81 exits (or in any case the bearing frame 20 and/or the box casing 27), to an extracted position, in which the hose 70 is at least partially unwound from the winding drum 82 and in practice the dispenser nozzle 73 is at a distance from the opening from which the support body 81 exits (or in any case the bearing frame 20 and/or the box casing 27) and vice versa.

In practice, in the extracted position the dispenser nozzle 73 can be taken to a distance from the bearing frame 20 and/or from the box casing 27, and the maximum distance depends on the length of the hose 70, in particular the outlet portion 72 thereof.

The device 10 comprises for example gripping means, such as for example a handlebar 90, which for example is fixed to the bearing frame 20 and/or to the box casing 27, for example in the rear portion (or front portion) thereof. The handlebar 90 comprises, for example, a pair of handles, each grippable by a user's hand.

The handlebar 90 comprises, for example, command means of the activation of the motor 30.

For example the handlebar 90 comprises a knob 91 of the accelerator type. The accelerator knob 91 comprises for example a potentiometer and appropriate command cabling connected to the motor 30 through a control and command unit 92.

The knob 91 (or in any case the handlebar 90 or the box casing 27 in the environs of the handlebar 90) comprises an on/off type switch enabling or interrupting the electrical supply to the motor 30.

The knob 91 (or in any case the handlebar 90 or the box casing 27 in the environs of the handlebar) can comprise a LED for signalling start-up of the motor 30.

Further, the knob 91 (or in any case the handlebar 90 or the box casing 27 in the environs of the handlebar 90) comprises a drive selector, for example a microswitch (manually selectable or simply activated by the rotation of the knob 91 in one rotation direction) for selecting the movement command, which is for example able to operate the motor 30 at different speeds and/or different directions.

In the example the control and command unit 92 is configured, for example by command of the drive selector, to operate the motor 30 at a first forward velocity.

For example, the control and command unit 92 is configured, for example by command of the drive selector, to operate the motor 30 also at a second forward velocity (faster than the previous velocity).

Alternatively or additionally, the control and command unit 92 is configured, for example on the command of the drive selector, to operate the motor 30 also at a third reverse velocity.

For example, the first drive velocity and the third drive velocity can be the same (in absolute terms) as one another, for example, at 3 Km/h.

The second drive velocity, for example, is 5 Km/h.

In particular, the knob 91 (and/or the control and command unit 92) is for example configured such as to command the motor 30 to perform a progressive motion i.e. with a growing velocity up to reaching the first, second or third gear speed; for example the motor 30 might be activated with a progressive increase from stationary position up to the first speed, or from the stationary position up to the third speed, as well as from the first speed to the second speed.

The knob 91 (or in any case the handlebar 90 or the box casing 27 in the environs of the handlebar) can comprise a safety relay, which on accidental release of the handlebar 91 (or both the handles) halts the motor 30.

The control and command unit 92 is for example powered electrically by the battery 60.

The control and command unit 92 might further comprise a current limiter, able to regulate the maximum current to the motor 30.

The control and command unit 92 might further comprise regenerating means, for example a recycling device configured to recharge the battery 50 in the steps of deceleration of the device 10.

The device 10 might be of the man-on-board type or, as shown in the figures, of the man-on-the-ground type.

In the light of what has been described, the functioning of the device 10 is the following.

Once the tank 40 has been filled with the desired irrigation liquid, the user can activate the device 10 by activating the knob 91 and can manoeuvre the device 10 using the handlebars.

The device 10 can travel over any type of terrain and any type of pathway thanks to the modest dimensions thereof, to the motor 30 activating the front wheels 24 and 25 and to the differential 263.

When the device 10 has been brought in proximity of the place where the vegetation to be irrigated is located, the user only has to extract the dispenser nozzle 73, in practice by pulling the outlet portion 72 by unreeling it, into one of the extracted positions thereof, so as to near the dispenser nozzle to the vegetation, and then open the tap 74.

On activation of the tap 74, the pump 50 instantly collects liquid from the tank 40 and sends it under pressure to the dispenser nozzle 73 which dispenses the water to the vegetation.

Once the watering operation has been terminated, it is sufficient to activate the hose reel 80, for example by a first slight traction of the hose 70, so as to return the hose 70 into the retracted position, and the dispenser nozzle 73 in proximity of the position thereof in the bearing frame 20 and/or in the box casing 27 and the device 10 can then be newly moved and positioned where necessary.

The invention as it is conceived is susceptible to numerous modifications and variants, all falling within the scope of the inventive concept.

Further, all the details can be replaced by other technically-equivalent elements.

In practice, the materials used, as well as the contingent shapes and dimensions, can be any according to requirements, without forsaking the scope of protection of the following claims.

## Claims

1. A fluid dispenser device (10) which comprises a bearing frame (20) provided with a plurality of ground-resting wheels (23, 24, 25) of which at least a drive wheel (24) activated in rotation by at least a motor (30) located on-board the bearing frame (20), a tank (40) of at least a fluid to be dispensed supported by the bearing frame (20) and a pump (50), located on-board the bearing frame (20), able to collect the fluid contained in the tank (40) so as to send the fluid under pressure to at least a dispenser nozzle (73) via a hose (70) interposed between the dispenser nozzle (73) and the tank (40), wherein the hose (70) is wound about at least a hose reel (80) fixed to the bearing frame (20), so as to be able to activate the dispenser nozzle (73) between at least a retracted position, in which the dispenser nozzle (73) is arranged in proximity of the bearing frame (20), and an extracted position, in which the dispenser nozzle (73) is arranged in a distal position from the bearing frame (20).

2. The device (10) of claim 1, wherein the hose reel (80) comprises a support body (81) fixed to the bearing frame (20), a winding drum (82) of the hose (70) rotatably associated to the support body (81) and at least a recall spring (83) interposed between the support body (81) and the winding drum (82) configured such as to re-wind the hose (70) from the extracted position to the retracted position.

3. The device (10) of claim 1 or 2, **characterised in that** it comprises a battery (60) located on-board the bearing frame (20) and configured such as to electrically power the motor (30) and the pump (50).

4. The device (10) of claim 3, wherein the battery (60) is fixed extractably to the bearing frame (20) by means of at least a releasable hooking element.

5. The device (10) of any one of the preceding claims, **characterised in that** it comprises a box casing (27) fixed to the bearing frame (20) and configured so as to enclose internally thereof the tank (40), the motor (30), the pump (50), the hose reel (80) and at least a portion of the battery (60).

6. The device (10) of claim 5, wherein the battery (60) comprises at least a grippable portion arranged externally of the box casing (27) and/or of the bearing frame (20).

7. The device (10) of claim 6, wherein the grippable portion of the battery (60) comprises release means able to command the release of the hooking element of the battery (60) located internally of the box casing (27) and/or of the bearing frame (20).

8. The device (10) of any one of the preceding claims, wherein the drive wheel (24) is located on an axle (26) provided with at least a differential (263).

9. The device (10) of any one of the preceding claims, **characterised in that** it comprises at least an activating handlebar (90) associated to the bearing frame (20) and provided with command means (91) of the motor for activating the at least a drive wheel (24) in movement.

10. The device (10) of any one of the preceding claims, **characterised in that** it comprises at least a control and command unit (92) of the motor (30), configured so as to selectively activate the motor (30) at least at a first slow velocity and a second fast velocity.

11. The device (10) of any one of the preceding claims, wherein the pump (50) is self-priming in response to the opening of a tap (74) located at the dispenser nozzle (73).
